# EUROPÄISCHE PATENTSCHRIFT

(11) **EP 2 623 416 B1**
(45) Veröffentlichungstag und Bekanntmachung des Hinweises auf die Patenterteilung: **20.05.2020**
(21) Anmeldenummer: 12008030.4
(22) Anmeldetag: 30.11.2012
(51) Int. Cl.: B63H 23/24, B60L 50/13, B63J 3/02, B60L 1/02, B63J 99/00, B63H 21/21, B60L 1/00, B63H 21/20, B63B 79/00

(54) **Energieversorgungs- und Antriebsanlage für Schiffe**
Energy supply and propulsion assembly for ships
Installation d'alimentation en énergie et d'entraînement de navires

(30) Priorität: 01.02.2012 DE 102012001892
(43) Veröffentlichungstag der Anmeldung: 07.08.2013
(73) Patentinhaber: Andersen, Peter, 21075 Hamburg (DE)
(72) Erfinder: Andersen, Peter, 21075 Hamburg (DE)
(74) Vertreter: Lelgemann, Karl-Heinz

(56) Entgegenhaltungen:
- EP-A2- 1 614 621
- EP-A2- 2 090 508
- WO-A1-2005/025981
- WO-A1-2007/073980
- WO-A2-2005/049418
- WO-A2-2010/060777
- WO-A2-2011/041425
- DE-A1- 1 932 929

## Beschreibung

Die Erfindung bezieht sich auf eine Energieversorgungs- und Antriebsanlage für Schiffe, mit Dieselgeneratoreinheiten, mittels denen elektrische Energie erzeugbar ist, Umrichtereinheiten, die jeweils einer Dieselgeneratoreinheit zugeordnet sind und mittels denen die von den Dieselgeneratoreinheiten in Form von Wechselstrom erzeugte elektrische Energie in Gleichstrom umwandelbar ist, einem Gleichstromzwischenkreis, in den die von den Dieselgeneratoreinheiten erzeugte elektrische Energie über die Umrichtereinheiten als Gleichstrom einspeisbar ist, Antriebseinheiten und weiteren Verbrauchern, die aus dem Gleichstromzwischenkreis mit elektrischer Energie versorgbar sind, Umrichtereinheiten, die jeweils einer Antriebseinheit, einem Verbraucher bzw. einer Verbrauchergruppe zugeordnet sind und mittels denen die aus dem Gleichstromzwischenkreis in Form von Gleichstrom abgenommene elektrische Energie in Wechselstrom für die Antriebseinheiten und weiteren Verbraucher umwandelbar ist, und einer Steuervorrichtung, an die die Dieselgeneratoreinheiten, die Umrichtereinheiten, der Gleichstromzwischenkreis, die Antriebseinheiten und die weiteren Verbraucher angeschlossen sind.

Derartige Energieversorgungs- und Antriebsanlagen für Schiffe werden häufig eingesetzt und haben sich in der Praxis als zuverlässig und betriebssicher erwiesen, und sind aus zum Beispiel aus dem Dokument EP1614621 A2 bekannt.

Ausgehend von dem vorstehend geschilderten Stand der Technik liegt der Erfindung die Aufgabe zugrunde, die gattungsgemäße Energieversorgungs- und Antriebsanlage für Schiffe derart weiterzubilden, daß zum einen der technisch-konstruktive Aufwand für ihre Realisierung reduziert ist und zum anderen der an Bord eines Schiffes für die Energieversorgungs- und Antriebsanlage erforderliche Bauraum erheblich reduziert ist.

Diese Aufgabe wird erfindungsgemäß dadurch gelöst, daß die Dieselgeneratoreinheiten mit individuell einstellbaren und variablen Generatordrehzahlen betreibbar sind, daß mittels der Steuervorrichtung ein Anforderungsprofil bezüglich der von den Dieselgeneratoreinheiten zu erzeugenden Quantität an elektrischer Energie erstellbar ist, und daß die Generatordrehzahl jeder Dieselgeneratoreinheit mittels der Steuervorrichtung unter Berücksichtigung des erstellten Anforderungsprofils individuell steuer- bzw. regelbar ist. Aufgrund der erfindungsgemäß vorgesehenen Ausgestaltung der Dieselgeneratoreinheiten, deren Generatordrehzahlen jeweils individuell einstellbar und variabel sind, ist es möglich, die Dieselgeneratoreinheiten bei bestimmten Anforderungsprofilen hinsichtlich der gesamten Menge der zu erzeugenden elektrischen Energie auch in solchen Betriebszuständen zu betreiben, die an sich nicht optimal sind. Da die Zeiten, in der an die Energieversorgungs- und Antriebsanlage derartige Anforderungen hinsichtlich der Gesamtmenge der zu erzeugenden elektrischen Energie gestellt werden, jedoch äußerst gering sind, ergibt sich aufgrund der Tatsache, daß beispielsweise statt fünf vier Dieselgeneratoreinheiten vorgesehen sein können, zum einen eine erheblich Einsparung hinsichtlich des Investitionsaufwands für die Energieversorgungs- und Antriebsanlage und des weiteren eine erhebliche Einsparung hinsichtlich des für die Installation der Energieversorgungs- und Antriebsanlage an Bord eines Schiffes erforderlichen Raumbedarfs.

Vorteilhaft sind die Dieselgeneratoreinheiten mit Generatordrehzahlen zwischen der Zünddrehzahl ihrer Dieselmotoren und deren maximalen Drehzahl, vorzugsweise zwischen 600 und 2.100 U/min betreibbar.

Gemäß der erfindungsgemäßen Energieversorgungs- und Antriebsanlage für Schiffe weist jede als Schiffspropeller ausgebildete Antriebseinheit des Schiffes eine Motor/Generatoreinheit, die aus dem Gleichstromzwischenkreis über den ihr zugeordneten Umrichter mit Wechselstrom versorgbar und mittels der der Schiffspropeller antreibbar ist, und einen Dieselmotor auf, mittels dem der Schiffspropeller unmittelbar antreibbar und/oder über die Motor/Generatoreinheit und den Umrichter elektrische Energie in den Gleichstromzwischenkreis einspeisbar ist und der an die Steuervorrichtung angeschlossen und mittels der Steuervorrichtung steuer- bzw. regelbar ist. Hierdurch ist sowohl ein unmittelbarer Antrieb des Schiffspropellers durch den betreffenden Dieselmotor möglich, wobei andererseits der Schiffspropeller auch aus dem Gleichspannungszwischenkreis heraus mit elektrischer Energie versorgbar ist und darüber hinaus vom Dieselmotor erzeugte Energie als elektrische Energie in den Gleichstromzwischenkreis einspeisbar ist.

Es ist möglich, den Gleichstromzwischenkreis in zumindest zwei Gleichstromzwischenteilkreise aufzuspalten, die jeweils über Umrichter an Dieselgeneratoreinheiten, Antriebseinheiten und Verbraucher angeschlossen und mittels einer Schalteinheit miteinander verbindbar sind.

Wenn die erfindungsgemäße Energieversorgungs- und Antriebsanlage zumindest eine Landanschlussvorrichtung aufweist, mittels der über einen ihr zugeordneten Umrichter elektrische Energie aus einem Landnetz in den Gleichstromzwischenkreis einspeisbar ist und die an die Steuervorrichtung angeschlossen ist, kann z.B. dann, wenn das Schiff sich in einem Hafen befindet, die Energieversorgung des Schiffes aus dem Landnetz heraus sichergestellt werden, wobei dann ein Betrieb der Dieselgeneratoreinheiten nicht erforderlich ist.

Dadurch, dass die Energieversorgungs- und Antriebsanlage eine Diagnoseeinheit aufweist, die an die Steuervorrichtung angeschlossen ist, in der der Steuervorrichtung übermittelte Betriebsdaten und von der Steuervorrichtung ausgegebene Steuersignale erfassbar und in einem Speichermedium abspeicherbar sind, und die über Internet und/oder geeignete Datenwege fernzugriffsfähig ist, wird die Möglichkeit geschaffen, dass in einer in quasi beliebiger Entfernung zum Schiff vorhandenen Zentrale Fachleute und Experten Zugriff auf sämtliche Daten nehmen können, die im Zusammenhang mit dem Betrieb der Energieversorgungs- und Antriebsanlage anfallen und eine Rolle spielen. Insbesondere ist es möglich, diejenigen Betriebsdaten und Steuersignale in der Zentrale einzusehen, die in einen Zeitraum fallen, in dem eine Störung oder eine Irregularität des Betriebs der Energieversorgungs- und Antriebsanlage aufgetreten ist. Bereits in der Zentrale können dann geeignete Maßnahmen eingeleitet werden, um die Störung bzw. die Irregularität zu beseitigen. Dies kann ggf. durch entsprechende Anweisungen an die Schiffsmannschaft geschehen, wobei Auswirkungen der durch die Schiffsmannschaft vorgenommenen Maßnahmen auf den Betrieb der Energieversorgungs- und Antriebsanlage in der Zentrale überprüft werden können. Der Aufwand für Wartungs- und Reparaturarbeiten kann entsprechend erheblich reduziert werden.

Es ist z.B. möglich, die erfindungsgemäße Energieversorgungs- und Antriebsanlage auf einer Motorsegelyacht zu installieren. Im Folgenden wird die Erfindung anhand einer Ausführungsform unter Bezugnahme auf die Zeichnungen näher erläutert. Es zeigen:
- Figur 1: eine Prinzipdarstellung einer Ausführungsform einer erfindungsgemäßen Energieversorgungs- und Antriebsanlage für Schiffe; und
- Figur 2: ein Schiff mit der in Figur 1 gezeigten Ausführungsform der erfindungsgemäßen Energieversorgungs- und Antriebsanlage für Schiffe.

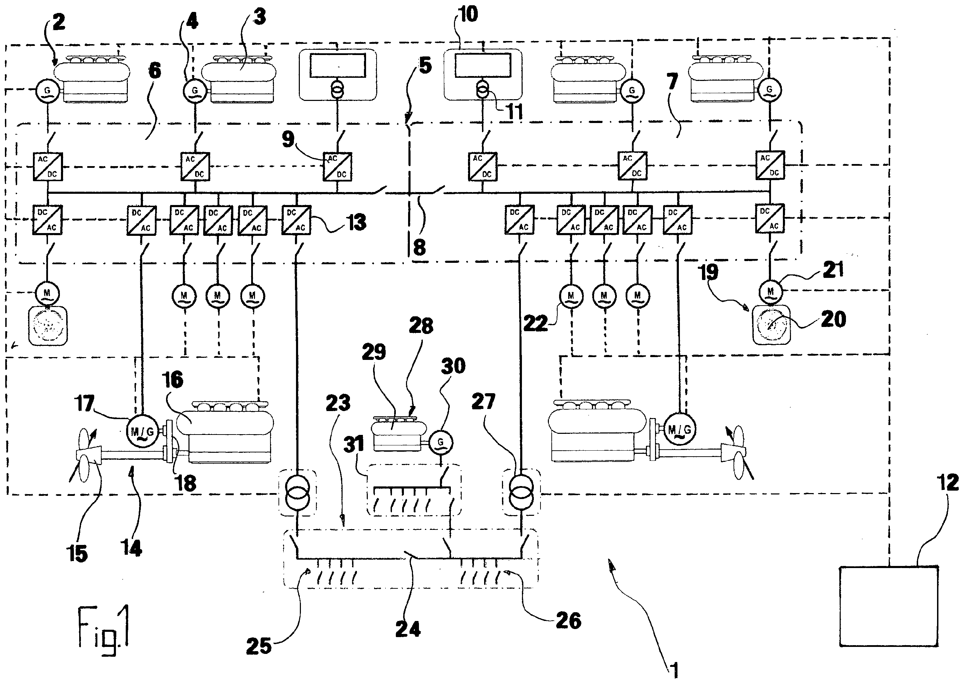

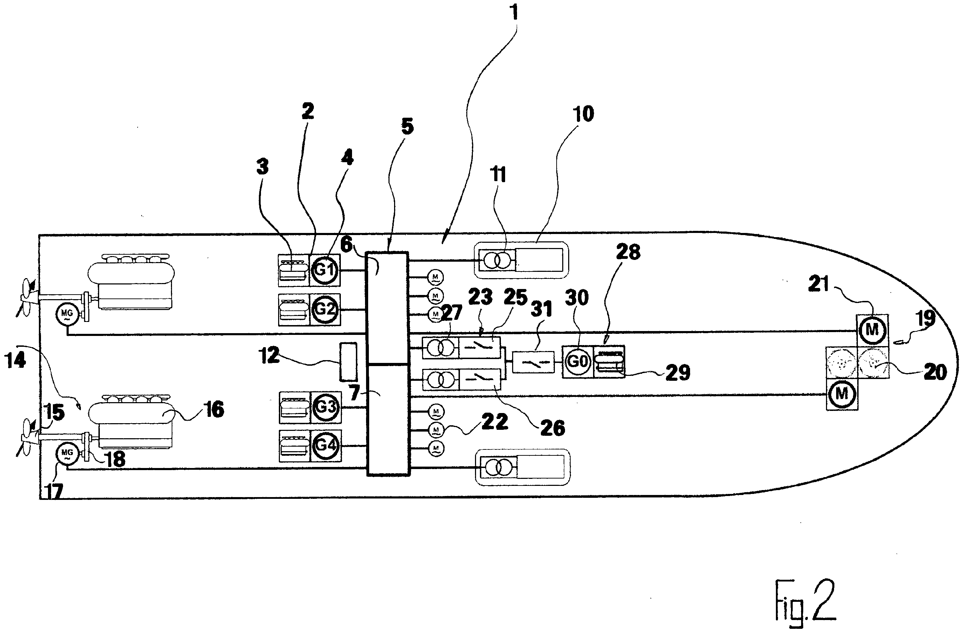

Eine im Folgenden anhand einer Ausführungsform unter Bezugnahme auf die Figuren 1 und 2 erläuterte erfindungsgemäße Energieversorgungs- und Antriebsanlage 1 für Schiffe dient dazu, die Energieversorgung an Bord von Schiffen unter Berücksichtigung der für die Antriebsanlage des Schiffes erforderlichen Energie sicherzustellen. Im dargestellten Ausführungsbeispiel hat die Energieversorgungs- und Antriebsanlage 1 vier Dieselgeneratoreinheiten 2, zu denen jeweils ein Dieselmotor 3 und ein Generator 4 gehört. Die Dieselgeneratoreinheiten 2 sind mit individuell einstellbaren und variablen Generatordrehzahlen betreibbar.

In den Dieselgeneratoreinheiten 2 wird elektrische Energie erzeugt, die in einen Gleichstromzwischenkreis 5 eingespeist wird. Der Gleichstromzwischenkreis 5 ist im dargestellten Ausführungsbeispiel in zwei Gleichstromzwischenteilkreise 6, 7 unterteilt, wobei zwischen den beiden Gleichstromzwischenteilkreisen 6, 7 eine Schalteinheit 8 vorgesehen ist, mittels der die beiden Gleichstromzwischenteilkreise 6, 7 miteinander verbindbar bzw. voneinander trennbar sind.

In den Dieselgeneratoreinheiten 2 wird elektrische Energie mit einer Wechselspannung erzeugt, die über erste Umrichtereinheiten 9, in denen eine Gleichrichtung erfolgt, in den Gleichstromzwischenkreis 5 eingespeist wird. Im dargestellten Ausführungsbeispiel sind jedem der beiden Gleichstromzwischenteilkreise 6, 7 zwei Dieselgeneratoreinheiten 4 zugeordnet. Des weiteren gehören zu der Energieversorgungs- und Antriebsanlage 1 zwei Landanschlussvorrichtungen 10, mittels denen der schiffsseitige Gleichstromzwischenkreis 5 an ein Landnetz anschließbar ist. Jede der beiden Landanschlussvorrichtungen 10, von denen jeweils eine dem Gleichstromzwischenteilkreis 6 bzw. dem Gleichstromzwischenteilkreis 7 des Gleichstromzwischenkreises 5 zugeordnet ist, kann über einen Transformator 11 und eine ihr zugeordnete Umrichtereinheit 9 elektrische Energie in den Gleichstromzwischenkreis 5 einspeisen, wenn sie an ein Landnetz, welches in den Figuren nicht gezeigt ist, angeschlossen ist.

Die Dieselgeneratoreinheiten 2, die Dieselmotoren 3, die Generatoren 4, die Schalteinheit 8, die Umrichtereinheiten 9 und die Landanschlussvorrichtungen 10 sind, wie dies in Figur 1 durch die gestrichelte Linie gezeigt ist, an eine Steuervorrichtung 12 angeschlossen. In der Steuervorrichtung 12 werden die Betriebsdaten der genannten Aggregate erfasst und die genannten Aggregate gesteuert bzw. geregelt.

Aus dem Gleichstromzwischenkreis 5 werden über Umrichtereinheiten 13 im Folgenden genannte Verbraucher bzw. Verbrauchergruppen mit elektrischer Energie mit einer Wechselspannung versorgt.

Im dargestellten Ausführungsbeispiel besitzt die Energieversorgungs- und Antriebsanlage 1 zwei Propulsionsantriebe 14, von denen jeweils einer dem Gleichstromzwischenteilkreis 6 bzw. dem Gleichstromzwischenteilkreis 7 des Gleichstromzwischenkreises 5 zugeordnet ist. Zu jedem Propulsionsantrieb 14 gehört ein Schiffspropeller 15, ein Dieselmotor 16, eine Motor/Generatoreinheit 17 und eine Getriebeeinheit 18. Der Schiffspropeller 15 ist unmittelbar mittels des Dieselmotors 16 antreibbar. Darüber hinaus ist der Dieselmotor 16 über die Motor/Generatoreinheit 17 und die Getriebeeinheit 18 des Propulsionsantriebs 14 antreibbar. Des weiteren ist mittels des Dieselmotors 16 über die Getriebeeinheit 18 und die Motor/Generatoreinheit 17 des Propulsionsantriebs 14 und die der Motor/Generatoreinheit 17 zugeordnete Umrichtereinheit 13 elektrische Energie in den Gleichstromzwischenkreis 5 einspeisbar. Die Dieselmotoren 16 sowie die Motor/Generatoreinheiten 17 der Propulsionsantriebe 14 und die den Propulsionsantrieben 14 zugeordneten Umrichtereinheiten 13 sind an die Steuervorrichtung 12 angeschlossen, so daß die Betriebsdaten der genannten Aggregate in der Steuervorrichtung 12 erfaßbar sind und die Steuervorrichtung 12 in den Betrieb der genannten Aggregate steuernd bzw. regelnd eingreifen kann.

Des weiteren gehören zu der anhand der Figuren 1 und 2 gezeigten Energieversorgungs- und Antriebsanlage 1 zwei Querrudereinheiten 19, zu denen jeweils ein Propeller 20 und ein Elektromotor 21 gehört. Im dargestellten Ausführungsbeispiel wird eine Querrudereinheit 19 aus dem Gleichstromzwischenteilkreis 6 und die andere Querrudereinheit 19 aus dem Gleichstromzwischenteilkreis 7 des Gleichstromzwischenkreises 5 mit elektrischer Energie versorgt, wobei zwischen dem Gleichstromzwischenkreis 5 und dem Elektromotor 21 jeweils eine Umrichtereinheit 13 vorgesehen ist. Die genannten Umrichtereinheiten 13 sind wie sämtliche Umrichtereinheiten 13 und die Elektromotoren 21 der Querrudereinheiten 19 an die Steuervorrichtung 12 angeschlossen, wobei ihre Betriebsdaten in der Steuervorrichtung 12 erfaßbar und sie mittels der Steuervorrichtung 12 steuer- bzw. regelbar sind.

Darüber hinaus werden aus dem Gleichstromzwischenkreis 5 über weitere Umrichtereinheiten 13 Kompressormotoren 22 einer Heiz-, Belüftungs- und Klimatisierungsanlage des Schiffes mit elektrischer Energie versorgt, wobei jedem der im dargestellten Ausführungsbeispiel sechs Kompressormotoren 22 jeweils eine Umrichtereinheit 13 zugeordnet ist. Auch diese Umrichtereinheiten sowie die Kompressormotoren 22 sind zur Erfassung ihrer Betriebsdaten und zur Ermöglichung ihrer Steuerung und Regelung an die Steuervorrichtung 12 angeschlossen.

Darüber hinaus wird aus dem Gleichstromzwischenkreis 5 ein Schiffsnetz 23, dem eine Vielzahl im einzelnen nicht dargestellter Verbraucher angehört, mit elektrischer Energie versorgt. Das Schiffsnetz 23 ist mittels einer geeigneten Schaltanlage 24 in zwei Schiffsnetzteile 25, 26 aufspaltbar, wobei jedem Schiffsnetzteil 25, 26 ein Transformator 27 zugeordnet ist, über den sowie eine ihm nachgeschaltete Umrichtereinheit 13 der Anschluß an den Gleichstromzwischenkreis erfolgt. Jeder Transformator 27 ist mittels der ihm zugeordneten Umrichtereinheit 13 an den ihm zugeordneten Gleichstroamzwischenteilkreis 6 bzw. 7 angeschlossen. Zur Sicherung der Energieversorgung an das Schiffsnetz 23 auch bei einem Totalausfall der vorstehend geschilderten Energieversorgungs- und Antriebsanlage 1 ist eine Notgeneratoreinheit 28 mit einem Dieselmotor 29 und einem Generator 30 vorgesehen, an den das Schiffsnetz 23 über eine Notstromverteilung 31 angeschlossen ist. Es sei darauf hingewiesen, daß auch die Umrichtereinheiten 13 und Transformatoren 27, die an die Schiffsnetzteile 25, 26 des Schiffsnetzes 23 angeschlossen sind, an die Steuervorrichtung 12 angeschlossen sind, so daß ihre Betriebsdaten dort erfaßbar und in ihren Betrieb ggf. steuernd bzw. regelnd eingreifbar ist. Entsprechendes gilt für die dem Schiffsnetz 23 zugeordneten Verbraucher, wobei hierbei denkbar ist, daß nur bestimmte Kategorien von Verbrauchern an die Steuervorrichtung 12 angeschlossen sind.

In der Steuervorrichtung 12, an die die vorstehend geschilderten Aggregate angeschlossen sind, kann ein Anforderungsprofil für die Menge an elektrischer Energie erstellt werden, die von den Dieselgeneratoreinheiten 2 der Energieversorgungs- und Antriebsanlage 1 erzeugt werden muss, In Abhängigkeit hiervon kann die Generatordrehzahl jeder Dieselgeneratoreinheit 2 mittels der Steuervorrichtung 12 unter Zugrundelegung des vorstehend erwähnten Anforderungsprofils gesteuert bzw. geregelt werden.

Hierzu kann die Generatordrehzahl jeder Dieselgeneratoreinheit 2 zwischen 600 und 2.100 U/min schwanken. Durch diese Variationsmeglichkeit hinsichtlich der Generatordrehzahl jeder Dieselgeneratoreinheit 2 kann auch bei einer vergleichsweise geringen Anzahl derartiger Dieselgeneratoreinheiten 2 sichergestellt werden, daß jede denkbare Abfragespitze hinsichtlich der von den Dieselgeneratoreinheiten 2 zu erzeugenden elektrischen Energie abgedeckt werden kann. Die Gesamtzahl der für die Energieversorgungs- und Antriebsanlage 1 an Bord eines Schiffes zu installierenden Dieselgeneratoreinheiten 2 kann daher geringer angesetzt werden.

## Patentansprüche

1. Energieversorgungs- und Antriebsanlage für Schiffe, mit Dieselgeneratoreinheiten (2), mittels denen elektrische Energie erzeugbar ist, Umrichtereinheiten (9), die jeweils einer Dieselgeneratoreinheit (2) zugeordnet sind und mittels denen die von den Dieselgeneratoreinheiten (2) in Form von Wechselstrom erzeugte elektrische Energie in Gleichstrom umwandelbar ist, einem Gleichstromzwischenkreis (5), in den die von den Dieselgeneratoreinheiten (2) erzeugte elektrische Energie über die Umrichtereinheiten (9) als Gleichstrom einspeisbar ist, Antriebseinheiten (14) und weiteren Verbrauchern, die aus dem Gleichstromzwischenkreis (5) mit elektrischer Energie versorgbar sind, Umrichtereinheiten (13), die jeweils einer Antriebseinheit (14), einem Verbraucher bzw. einer Verbrauchergruppe zugeordnet sind und mittels denen die aus dem Gleichstromzwischenkreis (5) in Form von Gleichstrom abgenommene elektrische Energie in Wechselstrom für die Antriebseinheiten (14) und weiteren Verbraucher umwandelbar ist, und einer Steuervorrichtung (12), an die die Dieselgeneratoreinheiten (2), die Umrichtereinheiten (9, 13), der Gleichstromzwischenkreis (5), die Antriebseinheiten und die weiteren Verbraucher angeschlossen sind, wobei die Dieselgeneratoreinheiten (2) mit individuell einstellbaren und variablen Generatordrehzahlen betreibbar sind, wobei mittels der Steuervorrichtung (12) ein Anforderungsprofil bezüglich der von den Dieselgeneratoreinheiten (2) zu erzeugenden Quantität an elektrischer Energie erstellbar ist, und wobei die Generatordrehzahl jeder Dieselgeneratoreinheit (2) mittels der Steuervorrichtung (12) unter Berücksichtigung des erstellten Anforderungsprofils individuell Steuer- bzw. regelbar ist, **dadurch gekennzeichnet, dass** an die Steuervorrichtung (12) eine Diagnoseeinheit angeschlossen ist, in der der Steuervorrichtung (12) übermittelte Betriebsdaten und von der Steuervorrichtung (12) ausgegebene Steuersignale erfassbar und in einem Speichermedium abspeicherbar sind, und die über Internet und/oder geeignete Datenwege fernzugriffsfähig ist, und dass jede als Schiffspropeller (15) ausgebildete Antriebseinheit (14) eine Motor/Generatoreinheit (17), die aus dem Gleichstromzwischenkreis (5) über den ihr zugeordneten Umrichter mit Wechselstrom versorgbar und mittels der der Schiffspropeller (15) antreibbar ist, und einen Dieselmotor (16) aufweist, mittels dem der Schiffspropeller (15) unmittelbar antreibbar und/oder über die Motor/Generatoreinheit (17) und den Umrichter (13) elektrische Energie in den Gleichstromzwischenkreis (5) einspeisbar ist und der an die Steuervorrichtung (12) angeschlossen und mittels der Steuervorrichtung (12) Steuer- bzw. regelbar ist.

2. Energieversorgungs- und Antriebsanlage für Schiffe nach Anspruch 1, deren Dieselgeneratoreinheiten (2) mit Generatordrehzahlen zwischen der Zünddrehzahl ihrer Dieselmotoren und deren maximalen Drehzahl, vorzugsweise zwischen 600 und 2.100 U/min betreibbar sind.

3. Energieversorgungs- und Antriebsanlage für Schiffe nach einem der Ansprüche 1 oder 2, deren Gleichstromzwischenkreis (5) zumindest zwei Gleichstromzwischenteilkreise (6, 7) aufweist, die jeweils über Umrichter (9, 13) an die Dieselgeneratoreinheiten (2), Antriebseinheiten (14) und Verbraucher (19, 22, 23) angeschlossen und mittels einer Schalteinheit (8) miteinander verbindbar sind.

4. Energieversorgungs- und Antriebsanlage für Schiffe nach einem der Ansprüche 1 bis 3, mit zumindest einer Landanschlussvorrichtung (10), mittels der über einen ihr zugeordneten Umrichter (9) elektrische Energie aus einem Landnetz in den Gleichstromzwischenkreis (5) einspeisbar und die an die Steuervorrichtung (12) angeschlossen ist.

5. Motorsegelyacht, auf der eine Energieversorgungs- und Antriebseinheit für Schiffe nach einem der Ansprüche 1 bis 4 installiert ist.

## Claims

1. An energy-supply and propulsion system for ships, having diesel generator units (2), by means of which electrical energy can be generated, converter units (9), which are assigned to one diesel generator unit (2) in each case and by means of which the electrical energy generated by the diesel generator units (2) in the form of alternating current can be converted to direct current, a DC voltage link (5), into which the electrical energy generated by the diesel generator units (2) can be fed via the converter units (9) as direct current, propulsion units (14) and further consumers, which can be supplied with electrical energy from the DC voltage link (5), converter units (13), which are assigned to a propulsion unit (14), a consumer or a consumer group in each case and by means of which the electrical energy picked up from the DC voltage link (5) in the form of direct current can be converted into alternating current for the propulsion units (14) and further consumers, and a control device (12), to which the diesel generator units (2), the converter units (9, 13), the DC voltage link (5), the propulsion units and the further consumers are connected, wherein the diesel generator units (2) can be operated with individually adjustable and variable generator speeds, wherein a requirement profile with respect to the quantity of electrical energy to be generated by the diesel generator units (2) can be created by means of the control device (12), and wherein the generator speed of each diesel generator unit (2) can be controlled or regulated individually by means of the control device (12), taking account of the requirement profile created, **characterized in that** a diagnostic unit is connected to the control device (12), in which diagnostic unit operating data transmitted to the control device (12) and control signals output by the control device (12) can be captured and can be saved in a storage medium, and which diagnostic unit is capable of being accessed remotely via the internet and/or suitable data paths, and **in that** each propulsion unit (14), which is constructed as a ship's propeller (15), has an engine/generator unit (17), which can be supplied with alternating current from the DC voltage link (5) via the converter assigned to it and by means of which the ship's propeller (15) can be driven, and a diesel engine (16), by means of which the ship's propeller (15) can be driven directly and/or electrical energy can be fed into the DC voltage link (5) via the engine/generator unit (17) and the converter (13), and which can be connected to the control device (12) and can be controlled or regulated by means of the control device (12).

2. The energy-supply and propulsion system for ships according to Claim 1, the diesel generator units (2) of which can be operated with generator speeds between the firing speed of the diesel engines thereof and the maximum speed thereof, preferably between 600 and 2,100 r/min.

3. The energy-supply and propulsion system for ships according to one of Claims 1 or 2, the DC voltage link (5) of which has at least two partial DC voltage links (6, 7), which are in each case connected via converters (9, 13) to the diesel generator units (2), propulsion units (14) and consumers (19, 22, 23) and can be connected to one another by means of a switch unit (8).

4. The energy-supply and propulsion system for ships according to one of Claims 1 to 3, having at least one shore connection device (10), by means of which electrical energy from the onshore grid can be fed into the DC voltage link (5) via a converter (9) assigned to it and which is connected to the control device (12).

5. A motorsailer yacht, on which an energy-supply and propulsion unit for ships according to one of Claims 1 to 4 is installed.

## Revendications

1. Installation d'alimentation en énergie et d'entraînement pour bateaux, avec des unités de groupe Diesel (2), au moyen desquelles il est possible de produire de l'énergie électrique, des unités de convertisseur (9), qui sont respectivement attribuées à une unité de groupe Diesel (2) et au moyen desquelles l'énergie électrique produite par les unités de groupe Diesel (2) sous la forme de courant alternatif peut être convertie en courant continu, un circuit intermédiaire de courant continu (5) dans lequel l'énergie électrique produite par les unités de groupe Diesel (2) peut être introduite sous la forme de courant continu par le biais des unités de convertisseur (9) et d'autres consommateurs, qui peuvent être alimentés en énergie électrique à partir du circuit intermédiaire de courant continu (5), des unités de convertisseur (13), qui sont respectivement attribuées à une unité d'entraînement (14), un consommateur ou un groupe de consommateurs et au moyen desquels l'énergie électrique consommée sous la forme de courant continu à partir du circuit intermédiaire de courant continu (5) peut être convertie en courant alternatif pour les unités d'entraînement (14) et d'autres consommateurs et un dispositif de commande (12) auquel les unités de groupe Diesel (2), les unités de convertisseur (9, 13), le circuit intermédiaire de courant continu (5), les unités d'entraînement et les autres consommateurs sont raccordés, sachant que les unités de groupe Diesel (2) peuvent être utilisées avec des régimes de groupe individuellement réglables et variables , sachant qu'au moyen du dispositif de commande (12) un profil d'exigence concernant la quantité à produire en énergie électrique par les unités de groupe Diesel (2) peut être établi et sachant que le régime de groupe de chaque unité de groupe Diesel (2) peut être commandé ou réglé individuellement au moyen du dispositif de commande (12) en tenant compte du profil d'exigence établi, **caractérisée en ce qu'**une unité de diagnostic est raccordée au dispositif de commande (12) dans laquelle des données de fonctionnement transmises au dispositif de commande (12) et des signaux de commande émis par le dispositif de commande (12) peuvent être saisis et peuvent être mémorisés dans un moyen de mémorisation et qui est accessible à distance par Internet et/ou des circuits de données appropriés et **en ce que** chaque unité d'entraînement (14) constituée sous la forme d'hélice de bateau (15) comporte une unité moteur/groupe (17), qui peut être alimentée en courant alternatif à partir du circuit intermédiaire de courant continu (5) par le biais du convertisseur qui lui est attribué et au moyen de laquelle l'hélice de bateau (15) peut être entraînée et un moteur Diesel (16), au moyen duquel l'hélice de bateau (15) peut être directement entraînée et/ou de l'énergie électrique peut être introduite par le biais de l'unité moteur/groupe (17) et du convertisseur (13) dans le circuit intermédiaire de courant continu (5) et qui est raccordé au dispositif de commande (12) et peut être commandé ou réglé au moyen du dispositif de commande (12).

2. Installation d'alimentation en énergie et d'entraînement pour bateaux selon la revendication 1, dont les unités de groupe Diesel (2) peuvent être utilisées avec des régimes de groupe se situant entre le régime d'allumage de leurs moteurs Diesel et le régime maximal de celles-ci de préférence entre 600 et 2 100 tr/min.

3. Installation d'alimentation en énergie et d'entraînement pour bateaux selon l'une quelconque des revendications 1 ou 2, dont le circuit intermédiaire de courant continu (5) comporte au moins deux circuits partiels intermédiaires de courant continu (6, 7), qui sont raccordés respectivement par le biais de convertisseurs (9, 13) aux unités de groupe Diesel (2), unités d'entraînement (14) et consommateurs (19, 22, 23) et peuvent être reliés entre eux au moyen d'une unité de connexion (8).

4. Installation d'alimentation en énergie et d'entraînement pour bateaux, selon l'une quelconque des revendications 1 à 3, avec au moins un dispositif de raccordement à la terre (10), au moyen duquel de l'énergie électrique peut être introduite à partir d'un réseau terrestre dans le circuit intermédiaire de courant continu (5) par un convertisseur (9) qui lui est attribué, et qui est raccordé au dispositif de commande (12).

5. Yacht à voiles à moteur sur lequel est installée une unité d'alimentation en énergie et d'entraînement pour bateaux selon l'une quelconque des revendications 1 à 4.
